Europäisches Patentamt

European Patent Office

Office européen des brevets

(19)

(11) Veröffentlichungsnummer: **0 269 863**
**A2**

## (12) EUROPÄISCHE PATENTANMELDUNG

(21) Anmeldenummer: 87115885.3

(22) Anmeldetag: 29.10.87

(51) Int. Cl.⁴ **D04H 5/00**

(30) Priorität: 27.11.86 DE 3640580

(43) Veröffentlichungstag der Anmeldung:
08.06.88 Patentblatt 88/23

(84) Benannte Vertragsstaaten:
**AT BE CH DE ES FR GB GR IT LI LU NL SE**

(71) Anmelder: **Akzo N.V.**
**Postbus 186 Velperweg 76**
**NL-6800 LS Arnhem(NL)**

(72) Erfinder: **Valkenburg, Brand C.**
**Westbreukelderweg 11**
**NL-6721 MP Bonnehom(NL)**
Erfinder: **de Graaf, Stephanus, Dr.**
**Wolfhezerweg 19**
**NL-6874 AA Wolfheze(NL)**
Erfinder: **Böhler, Joachim, Dipl.-Ing.**
**Breubergstrasse 23**
**D-8767 Wörth am Main(DE)**
Erfinder: **Vollbrecht, Rolf, Ing.**
**Am Haselbusch 3**
**D-8753 Obernburg(DE)**

(74) Vertreter: **Fett, Günter**
**Akzo GmbH Kasinostrasse 19-23**
**D-5600 Wuppertal 1(DE)**

(54) **Kombinationsmatte mit Armierung.**

(57) Kombinationsmatte aus einer Mattenbahn mit Berg-und-Tal-Struktur und einer Armierung in Form eines Faden-und/oder Bändchensystems, die als Trägerstruktur für die Beschichtung von Wandungen verwendet wird. Die Armierung besteht aus Glas-, Aramid-, Silika-, Metall-oder synthetischen Polymerfäden und/oder -bändchen und wirkt in Belastungsrichtung, wobei sie entweder eine Formänderung verhindert oder zum Zweck einer Dickeneinstellung der Kombinationsmatte auf ein vorher festgelegtes Maß begrenzt.

Fig.3

EP 0 269 863 A2

## Kombinationsmatte mit Armierung

Die Erfindung betrifft eine Kombinationsmatte aus einer Mattenbahn mit Berg-und-Tal-Struktur und einer Armierung.

Derartige Kombinationsmatten sind beispielsweise aus der US-Patentschrift 4,342,807 im Landschaftsbau als Drainage-, Filter-oder Erosionsschutzmatten bekannt.

Der Erfindung liegt die Aufgabe zugrunde, eine Kombinationsmatte der gattungsgemäßen Art so zu gestalten, daß sie sich zum Einsatz als Trägerstruktur für die Beschichtung von vorzugsweise nicht-horizontalen Wandungen eignet.

Als Wandung sollen im Rahmen dieser Anmeldung alle im wesentlichen nicht horizontal verlaufenden Wände, wie z.B. Gebäudewände, Fassaden, Trenn-, Schutz-, Schachtwände, Wände von Behältern, Rohren oder dergleichen verstanden werden.

Als Beschichtungsmasse werden im Rahmen dieser Anmeldung alle Putze, Korrosionsschutzmittel, Mastix, Isolier-, Schallschutzmassen, Schäume, Harze, Kunststoffe oder dgl. verstanden werden.

Erfindungsgemäß wird diese Aufgabe mit einer Kombinationsmatte der eingangs genannten Art gelöst, bei welcher zur Verwendung dieser Kombinationsmatte als Trägerstruktur für eine Beschichtung von Wandungen in nicht-horizontaler Anordnung die Armierung aus mindestens einem Faden-und/oder Bändchensystem besteht, wobei - jeweils bezogen auf den Querschnitt - die Zugfestigkeit und/oder der Formänderungswiderstand größer ist als die Zugfestigkeit und/oder der Formänderungswiderstand der Mattenbahn, und die Armierung zumindest punktuell mit der Mattenbahn kraftschlüssig verbunden ist.

Die Armierung ist dann punktuell mit der Mattenbahn verbunden, wenn an den Berührungsstellen mit der Mattenbahn örtlich Verklebungen, Verschweißungen, Nähte, Verklammerungen o.ä. vorgesehen sind.

Die Mattenbahn mit Berg-und-Tal-Struktur kann entsprechend der US-Patentschrift aus einer Vielzahl sich stellenweise gegenseitig überkreuzender und an den Kreuzungsstellen miteinander verschweißter Fäden aus synthetischen Polymeren bestehen. Ebenso ist es möglich, daß die Mattenbahn aus einem verpreßten Gewebe besteht, das ggf. vor dem Verpressen mit Kunstharz getränkt wurde, das die Formstabilität im verpreßten Zustand gewährleistet. Ebenso kann die Mattenbahn durch eine entsprechend geformte Folie gebildet werden, die mit Durchbrüchen zur verbesserten Aufnahme der Beschichtungsmasse versehen sein kann.

Bei der Verwendung der aus der US-Patentschrift bekannten Mattenbahn mit Berg-und-Tal-Struktur als Trägerstruktur für die Beschichtung von Wandungen ist auch ohne spezielle Vorbehandlung der zu beschichtenden Oberfläche ein sicherer Auftrag der Beschichtungsmasse möglich. Hierzu wird die Mattenbahn mittels geeigneter Befestigungselemente, wie beispielsweise Schrauben oder Klammern, an der zu beschichtenden Wandung fixiert und dient als Tragwerk für die aufzubringende Beschichtungsmasse. Die durch die Vielzahl der sich stellenweise gegenseitig überkreuzenden und an den Kreuzungsstellen miteinander verschweißten Fäden aus synthetischen Polymeren gebildeten Hohlräume bilden zusammen mit der Berg-und-Tal-Struktur der Mattenbahn ein dreidimensionales Tragegerüst, durch das die Beschichtungsmasse zumindest über einen wesentlichen Teil der Auftragsdicke gestützt wird.

Die verhältnismäßig geringe Eigenstabilität dieser bekannten Mattenbahn hat jedoch in vielen Fällen zur Folge, daß sich die Mattenbahn jeweils unterhalb der Befestigung bei der Auf-bzw. Einbringung der Beschichtungsmasse längt. Dieser, vor allem durch das Gewicht der Beschichtungsmasse bedingte Effekt führt zu Ausbauchungen der Mattenbahn in den nichtfixierten Abschnitten und damit zu einem ungleichmäßigen Oberflächenverlauf. Weiterhin treten hierbei auch unerwünschte Hohlraumbildungen innerhalb der Beschichtungsmasse während der Trocknungsphase auf, die letztlich Risse in der fertigen Beschichtungsoberfläche zur Folge haben.

Die ebenfalls in der US-Patentschrift 4,342,807 erwähnte Kombinationsmatte mit einer Armierung aus einem Drahtgitter besitzt zwar eine ausreichende Eigenstabilität, doch ist sie aufgrund der Steifigkeit für großflächige Anwendungen schlecht handhabbar.

Darüberhinaus ist für viele Anwendungsfälle keine ausreichende Korrosionsbeständigkeit gegeben.

Erfindungsgemäß wird eine Verbesserung der Handhabbarkeit dadurch erreicht, daß eine Armierung aus mindestens einem Faden-und/oder Bändchensystem verwendet wird, welches so angeordnet ist, daß die Zugfestigkeit und/oder der Formänderungswiderstand der Mattenbahn unter annähernder Beibehaltung des vorteilhaften geringen spezifischen Gewichts in Richtung der Belastung erhöht wird.

Hierzu ist eine vorzugsweise Ausrichtung des Faden-und/oder Bändchensystems in Belastungsrichtung vorgesehen. Das Faden und/oder Bändchensystem kann in Form von Monofilen, Multifilen, Fadenscharen, Fadengelegen, Bändchen, Streifen, Seilen, Vliesstreifen, Vliesgelegen, Spiralfedern oder dergleichen vorliegen, die einzellagig, mehrlagig und/oder durch Querstege zu einer Matrix vernetzt in der Mattenbahn so eingearbeitet sind, daß sie vollständig in der Berg-und Tal-Struktur der Mattenbahn integriert sind. Dabei kann das Faden-und/oder Bändchensystem einen mono-, bi-, oder triaxialen Charakter annehmen.

Als Materialien für das Faden-und/oder Bändchensystem eignen sich textile, organische oder anorganische Materialien mit hoher Zugfestigkeit und/oder hohem Formänderungswiderstand. Besonders bewährt haben sich Glas-, Aramid-, Silikafaden-und/oder -bändchensysteme sowie Metallfadensysteme, die auch beschichtet sein können.

Ebenso ist es möglich, als Armierungsmaterial die auch zur Herstellung der Mattenbahn geeigneten synthetischen Polymere zu verwenden. Dies sind alle fadenbildenden, darunter insbesondere alle schmelzspinnbaren Polymere, insbesondere Polyamide, Polyester, Polyolefine oder Polypropylen. In diesem Fall wird die hohe Zugfestigkeit und/oder der hohe Formänderungswiderstand durch einen gegenüber den die Mattenbahn bildenden Faden vergrößerten Querschnitt und/oder eine geeignete Formgebung des Faden-und/oder Bändchensystems erreicht.

Weiterhin ist es möglich, das Faden-und/oder Bändchensystem mäanderförmig oder in Wellenstruktur in die Mattenbahn einzubringen und auf diese Weise eine definierte Konstruktionsdehnung zu verwirklichen. Bei der Anbringung der Kombinationsmatte auf der zu beschichtenden Oberfläche kann diese dann so weit gereckt werden, bis die gewünschte Zugfestigkeit bzw. der gewünschte Formänderungswiderstand oder eine gewünschte Endabmessung erreicht ist. In gleicher Weise läßt sich auf einfache Weise die Dicke der Trägerstruktur einstellen. Insbesondere kann dem Faden-und/oder Bändchensystem eine derartige Struktur einverleibt sein, daß das Recken der Kombinationsmatte bis zu der Längung erfolgen kann, bei der eine weitere Längung durch das Faden-und/oder Bändchensystem verhindert wird. Diese Effekte können durch eine geeignete Kombination von Formgebung und Materialauswahl innerhalb eines weiten Bereichs auf einfache Weise erzielt werden.

Die erfindungsgemäße Kombinationsmatte weist bevorzugt eine Dicke von 2,5 bis 125 mm auf, wobei in der Regel die Dicke der Kombinationsmatte kleiner gewählt wird als die Dicke der auf die Wand aufzubringenden Beschichtungsmasse.

Für die Mattenbahn mit Berg-und-Tal-Struktur, die aus einer Vielzahl sich stellenweise gegenseitig überkreuzender und an den Kreuzungsstellen miteinander verschweißter Fäden aus synthetischen Polymeren besteht, haben sich Fadendurchmesser von 0,1 bis 3,5 mm besonders bewährt.

Die erfindungsgemäße Kombinationsmatte kann beispielsweise nach dem in der US-PS 4,342,807 beschriebenen Verfahren hergestellt werden, wobei die Zufuhr des Armierungsmaterials vorteilhafterweise während des Spinnprozesses erfolgen kann.

So kann beispielsweise die Herstellung der Kombinationsmatte erfolgen durch gleichzeitiges Auspressen einer Schmelze eines synthetischen Polymers und einer Schmelze des Armierungsmaterials durch auf einem gemeinsamen Spinnbalken angeordnete Düsen mit jeweils einer Vielzahl von Spinnöffnungen in im wesentlichen senkrechter Richtung auf eine unterhalb des Spinnbalkens angeordnete bewegte Auffangstruktur, wobei sich die aus den Spinnöffnungen austretenden Fäden auf diese bewegte Auffangstruktur unter stellenweiser gegenseitiger Überkreuzung ablegen und an ihren Kreuzungsstellen miteinander verschweißen, anschließendes kontinuierliches Abnehmen von der bewegten Auffangstruktur und Ablegen bzw. Aufwickeln der abgekühlten, fertigen Kombinationsmatte.

Zur Ausbildung des Berg-und-Tal-Charakters der Kombinationsmatte ist die bewegte Auffangstruktur abwechselnd mit Erhöhungen und Vertiefungen versehen und kann beispielsweise als Walze, Trommel oder Endlosband ausgeführt sein. Je nach Anordnung der Erhöhungen und Vertiefungen kann eine Höcker-oder eine Wellenstruktur erzeugt werden. Die Ausrichtung von Wellenbergen und -tälern kann dabei entweder im wesentlichen in oder senkrecht oder schräg zur Abzugsrichtung der Mattenbahn gegeben sein.

Die wellenförmige Oberfläche der bewegten Auffangstruktur ist gekühlt und weist Erhöhungen beispielsweise in Form von Kegel-oder Pyramidenstümpfen, Elementen, wie Schrauben oder Nägeln mit ausgeprägten Köpfen, oder in einen geeigneten Werkstoff eingefrästen Nuten auf. Die Mattenbildung wird dadurch erreicht, daß sich die aus den Düsen austretenden Fäden auf der bewegten Auffangstruktur stochastisch verteilt auf und zwischen den Erhöhungen ablegen und an den Kreuzungspunkten miteinander verschweißen.

Der Abstand der Höcker soll hinreichend groß gewählt werden, daß die Fäden zwischen benachbarten Erhöhungen bis zum Grund der Vertiefung durchhängen und auch dort Verschweißungsstellen bilden können. Auf diese Weise entsteht ein dreidimensionales Flächengebilde mit einem besonders hohen Hohlraumanteil bzw. geringem spezifischen Flächengewicht.

Als vorteilhaft erweist sich bei der erfindungsgemäßen Kombinationsmatte, daß sich die Erhöhung des Formänderungswiderstands in Belastungsrichtung auf einfache Weise auch dadurch erreichen läßt, daß in einem bevorzugten Herstellungsverfahren das Armierungsmaterial als Fadenkette der bewegten Auffangstruktur zugeführt und mit den synthetischen Polymeren unterhalb der Düsenaustrittsöffnungen vereint wird. Die Zuführung der Fadenkette kann beispielsweise tangential zur bewegten Auffangstruktur vor oder hinter dem Spinnbalken erfolgen. Als besonders vorteilhaft hat sich eine Zufuhr im wesentlichen parallel zur Spinnrichtung durch den Spinnbalken oder durch zwei oder mehr Spinnbalken hindurch erwiesen, wobei in diesem Fall die Spinndüsen für das synthetische Polymer bzw. die Zufuhr der Fadenkette derart in einer Winkelstellung angeordnet sein können, daß die Auftreffsorte von Armierungsmaterial und synthetischem Polymer auf der bewegten Auffangstruktur eine Linie bilden. Hierbei ist auf besonders einfache Weise eine thermische Konditionierung des Armierungsmaterials möglich, die gegebenenfalls erforderlich sein kann, um ein gleichmäßiges Anschmiegen an die bewegte Auffangstruktur zu erreichen.

Wird die Armierung hinter dem Spinnbalken zugeführt, so kann es sich als zweckmäßig erweisen, die Armierung mittels einer geeignet beschichteten Walze auf die klebrigen Fäden der Mattenbahn aufzudrücken und so zu verschweißen.

Die Armierung der Mattenbahn kann auch dadurch erfolgen, daß die Armierungsfäden als Schußfäden im wesentlichen senkrecht zur Abzugsrichtung der Mattenbahn eingebracht und mit dem die Mattenbahn bildenden synthetischen Polymer vereint werden. Dabei kann der Schußfaden nach jedem Schuß abgeschnitten werden, so daß die Armierungsfäden als Einzelfäden vorliegen. Ebenso ist es möglich, den Schußfaden als Endlosfaden auszuführen.

Das Verhältnis der Schußgeschwindigkeit zur Abzugsgeschwindigkeit der Mattenbahn bzw. die Schußrichtung bestimmt die Winkellage der Armierungsfäden in der fertigen Mattenbahn. Liegt die Schußgeschwindigkeit sehr viel höher als die Abzugsgeschwindigkeit, ergibt sich eine im wesentlichen senkrechte Lage der Armierungsfäden in Bezug auf die Abzugsrichtung. Bei übereinstimmenden Geschwindigkeitswerten wird eine Winkellage von 45° erreicht. Es ist auch ein gleichmäßiger Zickzackverlauf des Armierungsfadens durch kontinuierliches Hin-und Herführen des Schußfadens zu erreichen.

Bei einer wellenförmigen Ausgestaltung der Mattenbahn läßt sich je nach Wahl des Geschwindigkeitsverhältnisses,der Ausrichtung der Wellenberge und -täler der bewegten Auffangstruktur sowie der Zuführart und -richtung des Armierungsmaterials die Winkellage zwischen den Armierungsfäden und den Wellenbergen und -tälern in weiten Bereichen beliebig einstellen. In den bevorzugten Ausführungsformen verlaufen die Armierungsfäden parallel zu den Wellenbergen und -tälern in der Scheitellinie und/oder senkrecht zu den Wellenbergen und -tälern.

Der Abstand der Armierungsfäden untereinander ist in Abhängigkeit des gewünschten Formänderungswiderstands der wellenförmigen Mattenbahn unter Berücksichtigung der jeweiligen Materialeigenschaften der Armierung und des Polymers zu wählen.

Geeignete synthetische Polymere für die wellenförmige Mattenbahn sind alle fadenbildenden, darunter insbesondere alle schmelzspinnbaren Polymere, insbesondere Polyamide, Polyester, Polyolefine, insbesondere Polypropylen.

Die synthetischen Polymere und/oder Armierungsfäden können Graphit, Metallteilchen, Füllmittel, Stabilisatoren, Additive, Ruß, Farbpigmente und/oder dgl. enthalten.

Die Kombinationsmatte kann mit einer zusätzlichen Befestigungsschicht versehen sein, die der Befestigung der Kombinationsmatte an der Wandung dient. Hierbei werden die Befestigungsmittel durch die Befestigungsschicht hindurch geführt. Damit wird verhindert, daß die Armierung durch die Befestigungsmittel geschwächt und in ihrer Funktion beeinträchtigt wird.

Die Befestigungsschicht ist in einer bevorzugten Ausführungsform als durchgehendes Vlies ausgebildet. Ebenso ist es möglich, die Befestigungsschicht abschnittsweise, z.B. in Form von Vliesstreifen, vorzusehen. Dies ist für solche Ausführungsformen der Kombinationsmatte erforderlich, die bei der Anbringung an der Wandung gereckt werden sollen.

Die Befestigungsschicht wird mit der Mattenbahn und/oder der Armierung mittels Kleben, Verschmelzen, Nähen, Klammern oder anderer geeigneter Techniken verbunden.

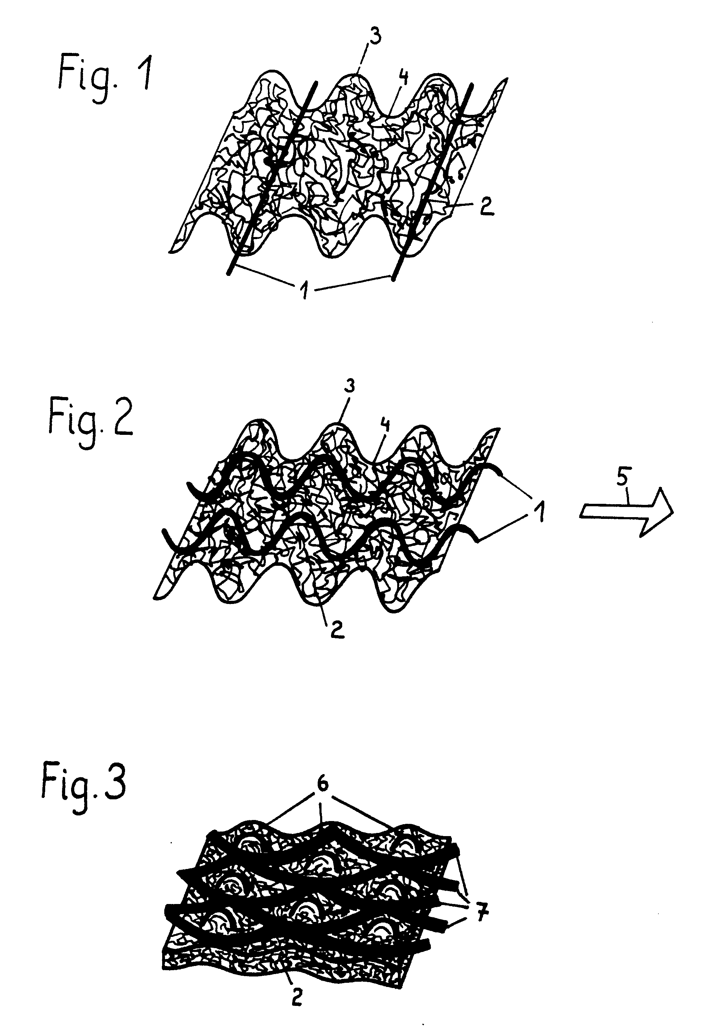

Die Figuren 1 bis 3, zeigen in perspektivischer Darstellung schematisch den erfindungsgemäßen Gegenstand.

In Figur 1 sind die Armierungsfäden 1 mit den synthetischen Polymerfäden 2 derart vereint, daß sie parallel zu den Wellenbergen 3 und -tälern 4 liegen.

In Figur 2 sind die Armierungsfäden 1 mit den synthetischen Polymerfäden 2 derart vereint, daß sie mäanderförmig im wesentlichen senkrecht zu den Wellenbergen 3 und -tälern 3 liegen. Je nach Wahl und Dimensionierung der Armierungsfäden 1 kann eine Konstruktionsdehnung in Richtung des Pfeiles 5 verifiziert werden.

Figur 3 zeigt Höcker 6 aus Polymerfäden 2 mit einem zwischen den Höckern 6 verlaufenden Bändchensystem 7 aus synthetischem Polymer.

## Ansprüche

1. Kombinationsmatte aus einer Mattenbahn mit Berg-und-Tal-Struktur und einer Armierung, dadurch gekennzeichnet, daß zur Verwendung dieser Kombinationsmatte als Trägerstruktur für eine Beschichtung von Wandungen in nichthorizontaler Anordnung die Armierung aus mindestens einem Faden-und/oder Bändchensystem besteht, wobei - jeweils bezogen auf den Querschnitt - die Zugfestigkeit und/oder der Formänderungswiderstand der Armierung größer ist als die Zugfestigkeit und/oder der Formänderungswiderstand der Mattenbahn, und die Armierung zumindest punktuell mit der Mattenbahn kraftschlüssig verbunden ist.

2. Kombinationsmatte nach Anspruch 1, dadurch gekennzeichnet, daß die Faden-und/oder Bändchensysteme in Form von Monofilen, Multifilen, Fadenscharen, Fadengelegen, Bändchen, Streifen, Seilen, Vliesstreifen, Vliesgelegen und/oder Spiralfedern einzellagig, mehrlagig, gebindelt und/oder durch Querstege zu einer Matrix vernetzt vorliegen.

3. Kombinationsmatte nach einem oder mehreren der Ansprüche 1 bis 2, dadurch gekennzeichnet, daß die Faden-und/oder Bändchensysteme aus Glas-, Aramid-, Silika-, Metall-und/oder synthetischen Polymerfäden und/oder -bändchen bestehen.

4. Kombinationsmatte nach einem oder mehreren der Ansprüche 1 bis 3, dadurch gekennzeichnet, daß die Faden-und/oder Bändchensysteme im wesentlichen parallel zu den Bergen und Tälern der Mattenbahn verlaufen.

5. Kombinationsmatte nach einem oder mehreren der Ansprüche 1 bis 4, dadurch gekennzeichnet, daß die Faden-und/oder Bändchensysteme - schräg und/oder senkrecht zu den Bergen und Tälern der Mattenbahn verlaufen.

6. Kombinationsmatte nach einem oder mehreren der Ansprüche 1 bis 5, dadurch gekennzeichnet, daß die Faden-und/oder Bändchensysteme mäanderförmig verlaufen.

7. Kombinationsmatte nach einem oder mehreren der Ansprüche 1 bis 6, dadurch gekennzeichnet, daß die Dicke der Kombinationsmatte zwischen 2,5 mm und 125 mm liegt.

8. Kombinationsmatte nach einem oder mehreren der Ansprüche 1 bis 7, dadurch gekennzeichnet, daß die Mattenbahn mit Berg-und-Tal-Struktur aus einer Vielzahl sich stellenweise gegenseitig überkreuzender und an den Kreuzungsstellen miteinander verschweißter Fäden aus synthetischen Polymeren besteht.

9. Kombinationsmatte nach Anspruch 8, dadurch gekennzeichnet, daß der Durchmesser der die Mattenbahn bildenden Polymerfäden zwischen 0,1 mm und 3,5 mm liegt.

10. Kombinationsmatte nach einem oder mehreren der Ansprüche 1 bis 7, dadurch gekennzeichnet, daß die Mattenbahn mit Berg-und-Tal-Struktur aus einem verpreßten Gewebe besteht.

11. Kombinationsmatte nach Anspruch 10, dadurch gekennzeichnet, daß das Gewebe mit Kunstharz getränkt ist.

12. Kombinationsmatte nach einem oder mehreren der Ansprüche 1 bis 7, dadurch gekennzeichnet, daß die Mattenbahn mit Berg-und-Tal-Struktur aus einer Folie besteht.

13. Kombinationsmatte nach Anspruch 12, dadurch gekennzeichnet, daß die Folie Durchbrüche aufweist.

14. Kombinationsmatte nach einem oder mehreren der Ansprüche 1 bis 13, dadurch gekennzeichnet, daß zumindest abschnittsweise eine Befestigungsschicht angebracht ist, die mit der Armierung und/oder mit der Mattenbahn verbunden ist.

Fig. 1

Fig. 2

Fig. 3